# EUROPEAN PATENT SPECIFICATION

(11) **EP 4 042 068 B1**
(45) Date of publication and mention of the grant of the patent: **02.10.2024**
(21) Application number: 20790253.7
(22) Date of filing: 09.10.2020
(51) Int. Cl.: F23D 1/04, C04B 2/12, F27B 1/00, F27B 1/10, F27D 99/00

(54) **BURNER FOR PRODUCING A FLAME IN A COMBUSTION CHAMBER OF AN ANNULAR VERTICAL SHAFT KILN, COMBUSTION CHAMBER FOR AN ANNULAR VERTICAL SHAFT KILN AND PROCESS OF COMBUSTION IN SUCH A COMBUSTION CHAMBER**
BRENNER ZUR ERZEUGUNG EINER FLAMME IN EINER BRENNKAMMER EINES RINGFÖRMIGEN VERTIKALEN SCHACHTOFENS, BRENNKAMMER FÜR EINEN RINGFÖRMIGEN VERTIKALEN SCHACHTOFEN UND VERBRENNUNGSVERFAHREN IN EINER SOLCHEN BRENNKAMMER
BRÛLEUR POUR PRODUIRE UNE FLAMME DANS UNE CHAMBRE DE COMBUSTION D'UN FOUR À CUVE VERTICALE ANNULAIRE, CHAMBRE DE COMBUSTION POUR UN FOUR À CUVE VERTICALE ANNULAIRE ET PROCÉDÉ DE COMBUSTION DANS UNE TELLE CHAMBRE DE COMBUSTION

(30) Priority: 09.10.2019 EP 19202298
(43) Date of publication of application: 17.08.2022
(73) Proprietor: S.A. LHOIST RECHERCHE ET DEVELOPPEMENT, 1342 Ottignies-Louvain-la-Neuve (BE)
(72) Inventor: HABIB, Ziad, 1630 Linkebeek (BE)
(74) Representative: Calysta NV
(86) International application number: PCT/EP2020/078480
(87) International publication number: WO 2021/069703

(56) References cited:
- WO-A1-2011/000203
- KR-B1- 101 630 223
- US-A1- 2003 104 328
- US-A1- 2003 157 451

## Description

### Technical field

The present invention is related to a burner for an annular vertical shaft kiln and to a combustion chamber of an annular vertical shaft kiln comprising said burner which is designed for producing a flame from combustible, in particular for solid powdered combustible and arranged within the said combustion chamber for producing stable flame along the longitudinal axis of the combustion chamber with an improved combustion rate. The present invention is also related to a process for combustion of a combustible, preferably a solid powdered combustible in a combustion chamber using a burner according to the present invention.

### State of the art

Originally designed for fast burning natural gas, the combustion chambers of annular shaft kiln (ASK) are of small size, namely small length over diameter (L/D).

While natural gas can easily produce stable flames along the axis of the combustion chamber with simple burners (axial injectors), it is difficult to have the same result with solid pulverized fuels such as coal or biomass or alternative fuels. The problem becomes more difficult to solve considering that upper combustion chambers in ASK operate in sub-stoichiometric conditions, namely with only 50% of the required combustion air.

Typically, a combustion chamber has a length in the order of magnitude of 2 m and the solid pulverized fuel is injected at an injection speed in the order of magnitude of 20 m/s, thereby the time passed by the solid pulverized fuel within the combustion chamber is of a tenth of second which is not enough to allow a full combustion within the chamber.

A combustion chamber is of generally cylindrical shape opened to the annular vertical channel of the annular shaft kiln comprising the solid material such as limestone or dolime to be calcined. The inner walls of the combustion chamber are made of a refractory material provided for withstanding high temperatures. The combustion chamber is connected to an arch or a bridge arranged within the annular vertical channel of the shaft kiln, for evacuating the heat from the combustion chamber to the annular vertical channel of the shaft kiln. The arch or bridge also comprises refractory materials. The arch prevents the solid material to be calcined to block the opening of the combustion chamber.

To fire pulverized solid fuels, the common practice since decades, achieved by trial and error, is to inject the fuel under the bridges via a transverse lance. Some other designs inject the fuel under the bridge through a lance lying along the floor of the combustion chamber. These current designs of combustion chamber operating with solid fuels result in an uncontrolled flame creating local high temperatures, reducing refractory lifetime. Poor combustion increases energy consumption and reduces production rate.

The current burners designed for producing a flame from solid pulverized combustible comprise a central channel connected to a powdered solid combustible supply and to a carrier air supply to pulverize the solid combustible. The central channel generally surrounded by an annular channel connected to an air supply to feed the flame produced. Most of the burners in the art have their central channel extending along a portion of a combustion chamber and comprise a deflector hood arranged at the extremity of the central channel such as to provide a movement of the pulverized solid combustible backwards in the combustion chamber in order to provide a stabilized flame. However, such kinds of burners are complicated to manufacture, and to maintain. They are subject to fooling which can present a risk of clogging and require frequent maintenance.

Another kind of burner is known from US 2013/0104328 for power plants. The burner comprises a lance which has a wall with a plate having a plurality of holes, as shown in figure 8 and a second sleeve forming an annular channel. The oxygen lance has further lateral holes at the end of the oxygen injection channel. The lateral holes provide oxygen to the solid fuel mixed with air where the coal is concentrated due to the geometry of the combustible injection channel. The injection of oxygen creates mixing effect and turbulences to disturb the flow pattern and accordingly, to have this effect, the velocities of the oxygen and coal injections should be similar.

Still Another kind of burner is disclosed in the document WO2018/002151. This burner is designed for a lower combustion chamber of an annular vertical shaft kiln, wherein air heated in the kiln during the combustion is reused and injected tangentially relative to the longitudinal axis of the burner such as to drag helically the pulverized combustible injected through a central channel of the burner, thereby increasing the time of residence of the pulverized combustible in the lower combustion chamber. Such a burner comprises a central channel of relatively large diameter fed by pulverized solid combustible carried by carrier air and is arranged in an inlet of the combustion chamber forming with the burner an annular channel through which further air is injected in the combustion chamber. In a combustion process using such a burner, a jet of powdered solid fuel which is carried by carrier air, and possibly of a flow of primary air, and a supply of oxidizing gas are injected in the same direction of propagation such as to form a stream of oxidizing gas around the jet of fuel projected by the burner, at a temperature that causes combustion of the fuel. The ratio between the specific rate of change of momentum of the burner and the specific rate of change of momentum of the oxidizing gas being equal to or less than 1.0 and greater than zero, allows to provide a stable flame wherein the time of residence of the solid combustible in the combustion chamber is increased. However, if such a burner works well in lower combustion chambers wherein hot air coming from the upper part of the kiln is introduced in the combustion chamber, upper combustion chambers generally don't comprise any port for introducing hot gas into such upper combustion chambers and therefore, these burners are not adapted for all of the combustion chambers.

A process for NOx reduction in combustion with concentrated coal streams and oxygen injection is disclosed in US 2003/0104328. This process is carried out by means of burners which are unable to provide an improved flame sta bilization.

Therefore there is a need for a design of a burner which can be associated to a combustion chamber and which doesn't comprises at least some of the drawbacks of prior art.

One particular need is to provide a burner which can produce a flame from solid powdered combustible and wherein the combustion of the solid combustible in a combustion chamber is improved.

Another particular need is to provide a burner which can produce a flame from solid powdered combustible wherein the combustion of solid fuel has a reduced impact on the wear of the refractories of a combustion chamber and on the arch or bridge arranged downstream the combustion chamber.

### Summary of the invention

According to a first aspect, the present invention is related to a burner for producing a flame in a combustion chamber of an annular vertical shaft kiln comprising:
a. a first innermost sleeve having a bore and a distal extremity directed through the inside of the said combustion chamber, and
b. a second sleeve surrounding said first innermost sleeve and forming a first annular channel with the said first innermost sleeve,
said burner being characterized in that said first innermost sleeve provides a bluff body to create a bluff body effect on the flame, said first annular channel being provided for annular injection of combustible, preferably a solid powdered combustible carried by a carrier fluid. According to the present invention, in a preferred embodiment, the said first innermost sleeve comprises cooling means.

More particularly, said cooling means comprise a jacket in which a cooling fluid is circulating, said jacket being provided along said innermost sleeve and a distal closure element of said first innermost sleeve.

In an alternative embodiment, said cooling means comprise a distal plate provided with a plurality of holes, said cooling means being provided for allowing injection of cooling air through said bore.

In one second embodiment, the said burner comprises a tubular injector arranged within the bore of the said first innermost sleeve, the said tubular injector being optionally removable, and comprising a connecting port for a secondary combustible supply to provide a secondary combustible for igniting the flame or for providing a cheaper combustible used partially in combination to the said combustible provided through the first annular channel, in order to decrease the costs of combustible.

In a variant of said second embodiment, said tubular injector presents a sectional diameter lower than an internal sectional diameter of said bore and is connected to a hole of a distal plate closing said first innermost sleeve.

Alternatively, in another embodiment, said tubular injector is a secondary burner comprising a tubular external wall forming said first innermost sleeve, said secondary burner being a co-burner for a secondary combustible for igniting the flame or for providing a cheaper combustible used partially in combination to the said combustible provided through the first annular channel.

In another embodiment including or not the features of the second embodiment and its alternatives, the said burner further comprises a third sleeve surrounding said second sleeve and forming a third annular channel with the said second sleeve, the said third annular channel being provided for injection of air, at least one of the said second sleeve or third sleeve being provided by fins arranged within the said third annular channel and extending helically from a first location to a second location such as to provide a swirl movement to the said air improving the mixing of said combustible with air.

The solid powdered combustible can be for example coal, coal oven gas, lignite. The secondary combustible can be for example recycled wastes, solid recovered fuels, recycled plastic fluff, sawdust.

The burner according the present invention can be included both in lower combustion chamber and upper combustion chamber of an annular vertical shaft kiln.

According to a second aspect, the present invention is related to a combustion chamber for an annular vertical shaft kiln, the said combustion chamber having a first closed extremity provided with a cylindrical inlet through which is inserted a burner according to the present invention for producing a flame and a second extremity opened to the inside of the said shaft kiln, and wherein said cylindrical inlet has a cylindrical inner wall forming a second annular channel with the said burner for injection of secondary air to confine the said flame within a fictive cylinder of diameter inferior to the diameter of the said combustion chamber.

The solid powdered combustible transported by a carrying fluid, generally air, is injected in the combustion chamber through the first annular channel of the burner. The innermost sleeve forms a bluff body which creates a depression of air which causes the solid powdered combustible to flow circularly back and forth, feeding and stabilizing the said flame. Such phenomenon is also known as bluff body effect.

More specifically, the burner comprises a first innermost sleeve having a bore and a distal extremity directed through the inside of the said combustion chamber, said first innermost sleeve providing a bluff body to create a bluff body effect on the flame, and a second sleeve surrounding said first innermost sleeve and forming a first annular channel with the said first innermost sleeve, the said first annular channel being provided for annular injection of combustible, preferably a solid powdered combustible carried by a carrier fluid,

The annular injection of the combustible together with the bluff body provided by the first innermost sleeve stabilize the flame. The present invention allowed accordingly to create a combustion chamber where the flame is stabilized notwithstanding the kind of combustible to be used. This effect was even more challenging to be reach, especially in view of the constraint linked to the annular shaft kiln, as explained above, i.e. in kilns where the combustion chambers are of small size, namely small length over diameter (L/D).

According to the present invention, in a preferred embodiment, the said first innermost sleeve comprises cooling means.

More particularly, said cooling means comprise a jacket in which a cooling fluid is circulating, said jacket being provided along said innermost sleeve and a distal closure element of said first innermost sleeve.

In an alternative embodiment, said cooling means comprise a distal plate provided with a plurality of holes, said cooling means being provided for allowing injection of cooling air through said bore.

Accordingly, in said former embodiment, the burner comprises :
- a first innermost sleeve having a bore for injecting cooling air and having a distal extremity directed through the inside of the said combustion chamber and closed by a distal plate provided with a plurality of holes;
- a second sleeve surrounding said first innermost sleeve and forming a first annular channel with the said first innermost sleeve, the said first annular channel being provided for injection of a solid powdered combustible carried by a carrier fluid, such as a carrier gas, for example carrier air

In order to prevent overheating of the hollowed plate, a flow of cooling air is provided through the first innermost sleeve and the plurality of holes machined into the hollowed plate. The cooling air has an injection speed smaller than the injection speed of carrier fluid. The design of the burner produces a stable flame along the axis of the combustion chamber with a controlled shape. In consequence, the combustion rate is improved and post combustion of solid fuel particles inside the material bed is reduced.

In addition, the present burner design allows firing gaseous or liquid fuels offering a fuel flexibility feature that was missing in the common practice described above.

The burner is designed for the upper combustion chamber but it can be used as well in the lower combustion chamber offering the same fuel flexibility advantages.

Preferably, the first innermost sleeve of the burner according to the present invention presents a cylindric wall, preferably a cylindric plain wall. The wall of the first innermost sleeve has preferably a thickness comprises between 2 mm and 20 mm, preferably between 4 mm and 10 mm.

Preferably, the second sleeve of the burner according to the present invention presents a cylindric wall, preferably a cylindric plain wall. The wall of the second sleeve has preferably a thickness comprises between 2 mm and 20 mm, preferably between 4 mm and 10 mm.

In one second embodiment, the said burner comprises a tubular injector arranged within the bore of the said first innermost sleeve, the said tubular injector being optionally removable, and comprising a connecting port for a secondary combustible supply to provide a secondary combustible for igniting the flame or for providing a cheaper combustible used partially in combination to the said combustible provided through the first annular channel, in order to decrease the costs of combustible.

In a variant of said second embodiment, said tubular injector presents a sectional diameter lower than an internal sectional diameter of said bore and is connected to a hole of a distal plate closing said first innermost sleeve.

Alternatively, in another embodiment, said tubular injector is a secondary burner comprising a tubular external wall forming said first innermost sleeve, said secondary burner being a co-burner for a secondary combustible for igniting the flame or for providing a cheaper combustible used partially in combination to the said combustible provided through the first annular channel.

Preferably, the said burner further comprises a third sleeve surrounding said second sleeve and forming a third annular channel with the said second sleeve, the said third annular channel being provided for injection of air, one of the said second sleeve or third sleeve being provided by fins arranged within the said third annular channel and extending helically from a first location to a second location such as to provide a swirl movement to the said air improving the mixing of said combustible with air.

Preferably, the third sleeve of the burner according to the present invention presents a cylindric wall, preferably a cylindric plain wall. The wall of the third sleeve has preferably a thickness comprises between 2 mm and 20 mm, preferably between 4 mm and 10 mm.

Preferably, the said combustion chamber is cylindrical and the said burner is arranged coaxially relative to the longitudinal axis of the combustion chamber or at proximity to the longitudinal axis of the combustion chamber. In consequence, the arrangement of the burner in the combustion chamber reduces wear of the refractory comparted to prior art practice wherein the flame produced by the burners of prior art using solid combustible fuel was directed at the proximity of the wall of the combustion chamber.

Preferably, each of the said sleeves has walls, preferably plain walls and having preferably a thickness comprises between 2 mm and 20 mm, preferably between 4 mm and 10 mm.

Preferably, the ratio between the external diameter of the said first innermost sleeve 101 on the inner diameter of the said second sleeve 103 is comprised between 10% and 99%, preferably between 50% and 95%.

Preferably, said second annular channel between the said cylindrical inlet and the said burner comprises a first portion upstream a second terminal portion, wherein the said first portion forms a larger annular channel than the second terminal portion. Such a configuration of the second annular channel provides an acceleration of the flow at the extremity of the terminal portion, thereby reducing the power of the pump needed to provide a flow of air which has a speed of injection high enough to confine the flame within a fictive cylinder of diameter inferior to the diameter of the said combustion chamber.

Preferably, the ratio between the outermost diameter of the said burner and the inner diameter of the said inlet of the combustion chamber is comprised between 70% and 99%, preferably between 80% and 95%.

Preferably, the ratio between the width of the said third annular channel and the width of the said second annular channel is comprised between 50% and 200%, preferably between 75% and 150%.

Preferably, the said burner is interchangeable.

According to a third aspect, the present invention is related to a process for combustion of a combustible, preferably a solid powdered combustible in a combustion chamber of an annular vertical shaft kiln the said combustion chamber having a first closed extremity provided with a cylindrical inlet through which is inserted a burner according to the present invention for producing a flame, the said combustion chamber having a second extremity opened to the inside of the said shaft kiln, wherein said cylindrical inlet has a cylindrical inner wall forming a second annular channel with the said burner for injection of secondary air to confine the said flame within a fictive cylinder of diameter inferior to the diameter of the said combustion chamber,
and wherein the process comprises the steps of:
- annular injection of said combustible, preferably said solid powdered combustible through said first annular channel with a carrier fluid having a first speed of injection and igniting a flame;
- providing a bluff body effect to said flame;
- injection of secondary air with a third speed of injection increased relative to the said first speed of injection, to confine the said flame within a fictive cylinder of diameter inferior to the diameter of the said combustion chamber.

Preferably, the bluff body effect provided to said flame is further improved by injection of a cooling fluid through the said bore of the said first innermost sleeve at a second speed of injection reduced relative to the said first speed of injection for cooling a distal plate closing the first innermost channel.

Preferably, the said step of igniting said flame is achieved after a step of preheating the said combustion chamber with the said burner fed by combustible gas or by another burner fed with combustible gas.

Preferably, the burner comprises :
- a first innermost sleeve having a bore and a distal extremity directed through the inside of the said combustion chamber, said first innermost sleeve providing a bluff body to create a bluff body effect on the flame,
- a second sleeve surrounding said first innermost sleeve and forming a first annular channel with the said first innermost sleeve, the said first annular channel being provided for annular injection of combustible, preferably a solid powdered combustible carried bya carrier fluid.

According to the present invention, in a preferred embodiment, the said first innermost sleeve comprises cooling means.

More particularly, said cooling means comprise a jacket in which a cooling fluid is circulating, said jacket being provided along said innermost sleeve and a distal closure element of said first innermost sleeve.

In an alternative embodiment, said cooling means comprise a distal plate provided with a plurality of holes, said cooling means being provided for allowing injection of cooling air through said bore.

In one second embodiment, the said burner comprises a tubular injector arranged within the bore of the said first innermost sleeve, the said tubular injector being optionally removable, and comprising a connecting port for a secondary combustible supply to provide a secondary combustible for igniting the flame or for providing a cheaper combustible used partially in combination to the said combustible provided through the first annular channel, in order to decrease the costs of combustible.

In a variant of said second embodiment, said tubular injector presents a sectional diameter lower than an internal sectional diameter of said bore and is connected to a hole of a distal plate closing said first innermost sleeve.

Alternatively, in another embodiment, said tubular injector is a secondary burner comprising a tubular external wall forming said first innermost sleeve, said secondary burner being a co-burner for a secondary combustible for igniting the flame or for providing a cheaper combustible used partially in combination to the said combustible provided through the first annular channel

Preferably, the said burner further comprises a third sleeve surrounding said second sleeve and forming a third annular channel with the said second sleeve, the said third annular channel being provided for injection of air, one of the said second sleeve or third sleeve being provided by fins arranged within the said third annular channel and extending helically from a first location to a second location, the process further comprising a step of injecting air with a fourth speed of injection intermediate between the said first speed of injection and the said third speed of injection through the said third annular channel such as to provide a swirl movement to the said air improving the mixing of said combustible with air.

Preferably, the said burner is interchangeable and the process comprises a step of removing the said burner and replacing the said burner by a second burner designed for combustion of a combustible gas.

### Brief description of the figures

Figure 1 represents a schematic cross sectional view of an annular vertical shaft kiln.
Figure 2 represents a schematic cross sectional view along a longitudinal axis of a combustion chamber according to a first embodiment of the invention.
Figure 3 represents a schematic cross sectional view along a longitudinal axis of a combustion chamber according to a second embodiment of the invention.
Figure 4 represents a schematic cross sectional view along a longitudinal axis of a combustion chamber according to a third embodiment of the invention.
Figure 5 represents a schematic cross sectional view along a longitudinal axis of a combustion chamber according to an alternative first embodiment of the invention.

It is to be mentioned that the drawings are not to scale.

### Description of the invention

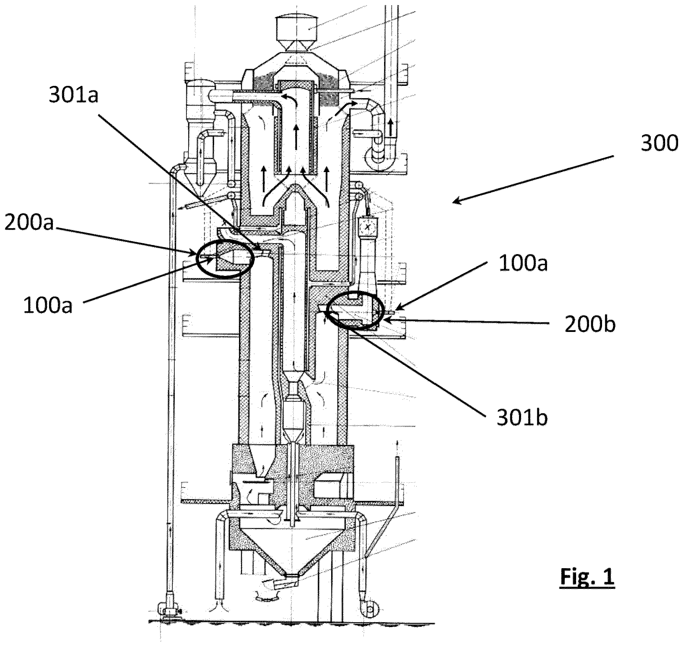

Figure 1 represents a schematic cross sectional view of an annular vertical shaft kiln 300 comprising a plurality of combustion chambers 200 terminated by an arch or a bridge 301. The material to be calcined, for example limestone or dolomite is introduced from the top of the kiln 300 which comprises an upper combustion chamber 200a and a lower combustion chamber 200b. The upper combustion chamber 200a is terminated by an arch or a bridge 301a and the lower combustion chamber 200b is terminated by an arch or a bridge 301b. The upper combustion chamber 200a has a first closed extremity provided with a cylindrical inlet through which is inserted a burner 100a while the lower combustion chamber 200b has a first closed extremity provided with a cylindrical inlet through which is inserted a burner 100b. The various components of an annular shaft kiln and its principle of functioning are well known in the art.

In the following, the description will be detailed for the upper combustion chamber 200a but the burner can be used alternatively or also in the lower combustion chamber 200b offering the same fuel flexibility advantages.

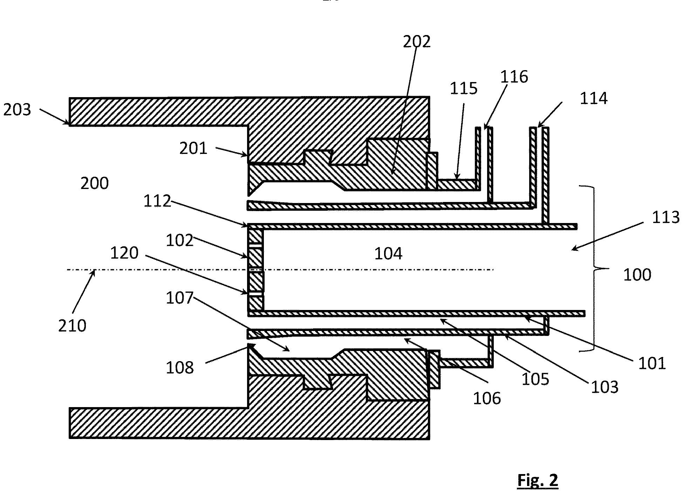

A first embodiment of a combustion chamber according to the present invention is presented in figure 2. The combustion chamber 200 has a first closed extremity 201 provided with a cylindrical inlet 202 through which is inserted a burner 100 for producing a flame. Opposite to the first extremity 201, the combustion chamber comprises a second extremity 203 opened to the annular channel of the said shaft kiln which comprises a bed of materials to be calcined. The inner walls of the combustion chamber are made of a refractory material. The said burner 100 comprises:
- a first innermost sleeve 101 having a bore 104 for injecting cooling air and having a distal extremity 112 directed through the inside of the said combustion chamber 200, the said extremity being closed by a distal plate 102 provided with a plurality of holes;
- a second sleeve 103 surrounding said first innermost sleeve 101 and forming a first annular channel 105 with the said first innermost sleeve 101, the said first annular channel 105 being connected to a combustible supply for injection of a combustible, preferably a solid powdered combustible carried by a carrier fluid;
and wherein said cylindrical inlet 202 has a cylindrical inner wall forming a second annular channel 106 with the said burner 100 for injection of secondary air to confine the said flame within a fictive cylinder of diameter inferior to the diameter of the said combustion chamber 200.

The said combustion chamber 200 is cylindrical and the said burner 100 is arranged coaxially relative to the longitudinal axis 210 of the combustion chamber or at the proximity to the said longitudinal axis 210 of the combustion chamber.

The burner 100 comprises a portion outside of the combustion chamber wherein the first innermost sleeve comprises a first port 113 connectable to a cooling air supply, the said second sleeve comprises a second port 114 connectable to solid powdered combustible supply and carrier gas supply, and the outer extremity of the said second annular channel 106 is tightly closed by an annular piece 115 provided by a third port 116 for feeding secondary air.

Preferably, each of the said sleeves has walls having a thickness comprises between 2 mm and 20 mm, preferably between 4 mm and 10 mm. In a particular embodiment of the invention, the wall thickness of the first innermost sleeve and second sleeve is of 5 mm.

Preferably, the ratio between the external diameter of the said first innermost sleeve (101) on the inner diameter of the said second sleeve (103) is comprised between 10% and 95%, preferably between 33% and 67%. For example, the outer diameter of the said first innermost sleeve is comprised between 40 and 70 mm, more particularly between 50 mm and 70 mm and the width of the first annular channel 105 is comprised between 2 mm and 10 mm, preferably between 4 mm and 6 mm.

Preferably, the said second annular 106 channel between the said cylindrical inlet 202 and the said burner 100 comprises a first portion 107 upstream a second terminal portion 108, wherein the said first portion 107 forms a larger annular channel than the second terminal portion 108. Preferably, the said terminal portion 108 forms a taper with an inner diameter progressively reduced towards the combustion chamber. Such a design allows increasing the speed of injection of the secondary air into the combustion chamber without increasing the flow rate of the pump providing the secondary air.

Preferably, the ratio between the outermost diameter of the said burner (100) and the inner diameter of the said inlet (202) is comprised between 70% and 99%, preferably between 80% and 95%.

Preferably the said burner is interchangeable with another burner.

A first embodiment of the process according to the invention using the combustion chamber as described according to a first embodiment comprises the steps of:
(i) injection of said solid powdered combustible through said first annular channel 105 with a carrier fluid having a first speed of injection and igniting a flame;
(ii) injection of a cooling fluid through the said bore 104 of the said first innermost sleeve at a second speed of injection reduced relative to the said first speed of injection, for cooling the said plate 102;
(iii) injection of secondary air with a third speed of injection increased relative to the said first speed of injection to confine the said flame within a fictive cylinder of diameter inferior to the diameter of the said combustion chamber.

Preferably, each of the steps (i), (ii) and (iii) are performed simultaneously.

In one embodiment, the said burner 100 is interchangeable with a second burner (not shown) used for combustion of a combustible gas or liquid, and the process comprises a preliminary step preheating the combustion chamber 200 using the second burner fed by a combustible gas or liquid. In one embodiment, the combustion chamber is preheated to 800°C. Then in a second preliminary step, the second burner is replaced by the burner 100 described herein above and solid powdered combustible is injected with the carrier air, the cooling air and the secondary air. The combustion chamber preheated beforehand provides the heat necessary to ignite the flame.

Alternatively, the said second port 114 of the burner can be connected to a combustible gas supply instead of the solid pulverized combustible and carrier gas supply. Once the combustion chamber has reached a desired temperature, for example 800°C, the second port 114 can be disconnected from the said combustible gas supply and connected to a solid pulverized combustible and carrier gas supply.

In one embodiment of the process, the solid pulverized combustible is injected with the carrier gas in the combustion chamber with a speed of injection of 25 m/s. The cooling fluid is flown through the bore 104 of the first innermost sleeve at a speed of injection of 5 m/s to cool the holed plate 102 and such as to provide a depression of air which causes the solid powdered combustible to flow circularly back and forth, creating a bluff body effect feeding and stabilizing the flame. The secondary air is injected in the combustion chamber through the reduced channel 108 of the second annular channel 106 with a speed of injection higher than the speed of injection of the solid pulverized combustible and carrier gas, for example a speed of injection comprised between 40 m/s and 100 m/s, more particularly between 50 m/s and 80 m/s.

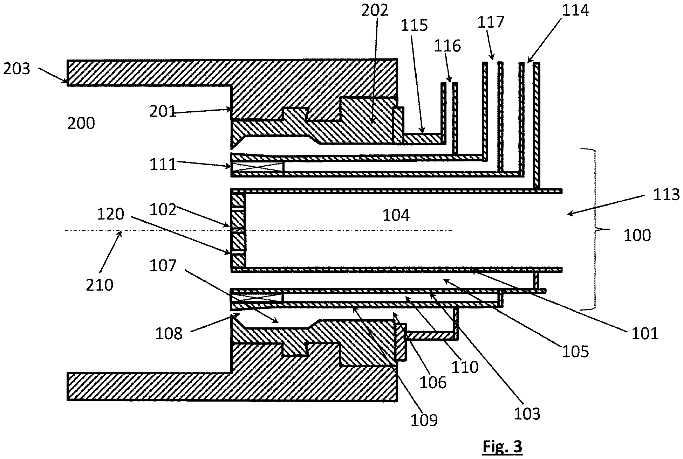

A second embodiment of a combustion chamber according to the present invention is presented in figure 3. The combustion chamber 200 has a first closed extremity 201 provided with a cylindrical inlet 202 through which is inserted a burner 100 for producing a flame. Opposite to the first extremity 201, the combustion chamber comprises a second extremity 203 opened to the annular channel of the said shaft kiln comprising a bed of material to be calcined. The said burner 100 comprises:
- a first innermost sleeve 101 having a bore 104 for injecting cooling air and having a distal extremity 112 directed through the inside of the said combustion chamber 200, the said extremity being closed by a distal plate 102 provided with a plurality of holes 120;
- a second sleeve 103 surrounding said first innermost sleeve 101 and forming a first annular channel 105 with the said first innermost sleeve 101, the said first annular channel 105 being provided for injection of a combustible, preferably a solid powdered combustible carried by a carrier fluid;
- a third sleeve 109 surrounding said second sleeve 103 and forming a third annular channel 110 with the said second sleeve 103, the said third annular channel 110 being provided for injection of air, at least one of the said second sleeve 103 or third sleeve 110 being provided by fins 111 arranged within the said third annular channel 110 and extending helically from a first location to a second location such as to provide a swirl movement to the said air improving the mixing of said combustible with air;
and wherein said cylindrical inlet 202 has a cylindrical inner wall forming a second annular channel 106 with the said burner 100 for injection of secondary air to confine the said flame within a fictive cylinder of diameter inferior to the diameter of the said combustion chamber.

The said combustion chamber 200 is cylindrical and the said burner 100 is arranged coaxially relative to the longitudinal axis 210 of the combustion chamber 200 or at the proximity to the longitudinal axis 210 of the combustion chamber.

The burner comprises a portion outside of the combustion chamber wherein the first innermost sleeve 101 comprises a first port 113 connectable to a cooling air supply, the said second sleeve 103 comprises a second port 114 connectable to a combustible supply, preferably a solid powdered combustible and of carrier gas supply, and the extremity of the said second annular channel 106 outside the combustion chamber is tightly closed by an annular piece 115 provided by a third port 116 for feeding secondary air. The third sleeve 109 comprises a fourth port 117 connectable to a swirl air supply.

Preferably, the fins 111 extends helically from the extremity of the burner directed to the combustion chamber, to a second location in the third annular channel, for example along a distance comprised between 2 and 10 cm. The helix angle formed by the fins can be comprised between 5° and 40°, preferably the helix angle is of at least 20°.

Preferably, each of the said sleeves has walls having a thickness comprises between 2 mm and 20 mm, preferably between 4 mm and 10 mm. In a particular embodiment of the invention, the wall thickness of the first innermost sleeve and second sleeve is of 5 mm.

Preferably, the ratio between the external diameter of the said first innermost sleeve 101 on the inner diameter of the said second sleeve 103 is comprised between 10 % and 99 %, preferably between 50 % and 95%. For example, the outer diameter of the said first innermost sleeve is comprised between 40 and 70 mm, more particularly between 50 mm and 70 mm and the width of the first annular channel 105 is comprised between 2 mm and 10 mm, preferably between 4 mm and 6 mm.

Preferably, the ratio between the width of the said third annular channel 110 and the width of the said second annular 106 channel is comprised between 4 % and 200%, preferably between 75% and 150%. The width of the second annular channel 106 may vary along the longitudinal axis of the burner from for example at least 1 mm or 2 mm up to 10 or 50 mm. For example, the width of the third annular channel 110 is preferably longitudinally constant and comprised between 2 and 10 mm, for example 5 mm.

Preferably, the said second annular channel between the said cylindrical inlet 202 and the said burner 100 comprises a first portion 107 upstream a second terminal portion 108, wherein the said first portion 107 forms a larger annular channel than the second terminal portion 108. Preferably, the said terminal portion 108 forms a taper with an inner diameter progressively reduced towards the combustion chamber.

Preferably, the ratio between the outermost diameter of the said burner 100 and the inner diameter of the said inlet 202 is comprised between 70% and 99%, preferably between 80% and 95%.

Preferably the said burner is interchangeable with another burner, for example a burner connected to a combustible gas supply.

A second embodiment of the process according to the invention using the combustion chamber as described according to a first embodiment comprises the steps of:
i. injection of said solid powdered combustible through said first annular channel 105 with a carrier fluid having a first speed of injection, and igniting a flame;
ii. injection of a cooling fluid through the said bore 104 of the said first innermost sleeve 101 at a second speed of injection reduced relative to the said first speed of injection, for cooling the said plate 102;
iii. injection of secondary air with a third speed of injection increased relative to the said first speed of injection to confine the said flame within a fictive cylinder of diameter inferior to the diameter of the said combustion chamber 200
iv. injection of swirl air through the said third annular channel 110 with a fourth speed of injection intermediate between the said first speed of injection and the said third speed of injection for providing a swirl movement of air around the flame and improving mixing of solid pulverized combustible with the flame.

Preferably, each of the steps (i), (ii), (iii) and (iv) are performed simultaneously.

In one embodiment, the said burner 100 is interchangeable with a second burner (not shown) connected to a supply of combustible gas or liquid, and the process comprises a preliminary step preheating the combustion chamber 200 using the second burner fed by a combustible gas or liquid. In one embodiment, the combustion chamber is preheated to 800°C. Then in a second preliminary step, the second burner is replaced by the burner 100 described herein above and solid powdered combustible is injected with the carrier air, the cooling air and the secondary air. The combustion chamber preheated beforehand provides the heat necessary to ignite the flame.

Alternatively, the said second port 114 of the burner can be connected to a combustible gas supply instead of the solid pulverized combustible and carrier gas supply. Once the combustion chamber has reached a desired temperature, for example 800°C, the second port 114 can be disconnected from the said combustible gas supply and connected to a solid pulverized combustible and carrier gas supply.

In one embodiment of the process, the solid pulverized combustible is injected with the carrier gas in the combustion chamber with a speed of injection of 25 m/s. The cooling fluid is flown through the bore 104 of the first innermost sleeve at a speed of injection of 5 m/s to cool the holed plate 102 and such as to provide a depression of air which causes the solid powdered combustible to flow circularly back and forth, creating a bluff body effect feeding and stabilizing the flame. The swirl air is injected into the combustion chamber with a speed of injection comprised between 40 m/s and 60 m/s, preferably at least 50 m/s. The secondary air is injected in the combustion chamber through the reduced channel 108 of the second annular channel 106 with a speed of injection higher than the speed of injection of the solid pulverized combustible and carrier gas, for example a speed of injection comprised between 60 m/s and 100 m/s, more particularly between 70 m/s and 90 m/s.

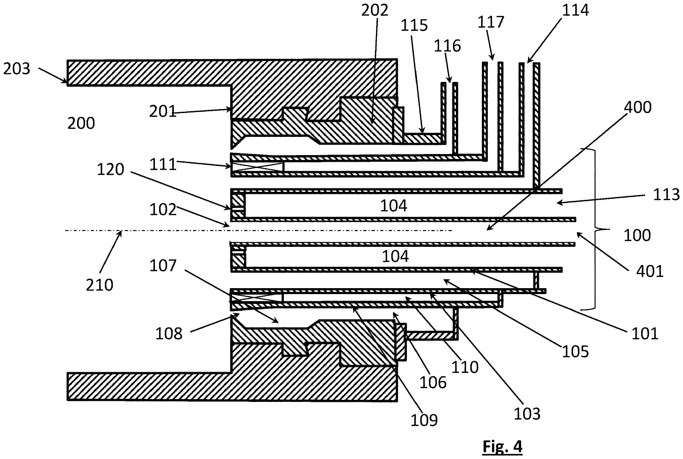

The figure 4 represents an embodiment of the one described in relation with figure 3, with a tubular injector 400 as an additional feature. The said burner comprises a tubular injector 400 arranged within the bore 104 of the said first innermost sleeve 101 and connected to a hole 120 of the said plate 102, the said tubular injector 400 being optionally removable, and comprising a connecting port 401 for a secondary combustible supply to provide a secondary combustible for igniting the flame or for providing a cheaper combustible used partially in combination to the said combustible provided through the first annular channel, in order to decrease the costs of combustible. The tubular injector 400 can also be provided as an additional feature to the embodiment described in relation with the figure 2.

In the embodiment where the tubular injector 400 is removable, it is to be noted that when removed, the distal extremity of the first innermost sleeve 101 will be closed by a closure accessory. Another possibility is to simply slightly retract the tubular injector from the distal extremity in order to protect the tubular injector from the flame, but to keep it inside a further sleeve, thereby not perturbating the equilibrium of fluxes and keeping the bluff body effect.

The tubular injector 400 is typically a central injector with respect to the bore 104 and can present various diameter. In some embodiments, said tubular injector 400 presents a sectional diameter lowerthan an internal sectional diameter of said bore 104 and is connected to a hole (central hole) of a distal plate closing said first innermost sleeve 101, with holes 102 or not.

Alternatively, in another embodiment, said tubular injector 400 is a secondary burner comprising a tubular external wall forming said first innermost sleeve 101, said secondary burner being a co-burner for a secondary combustible for igniting the flame or for providing a cheaper combustible used partially in combination to the said combustible provided through the first annular channel.

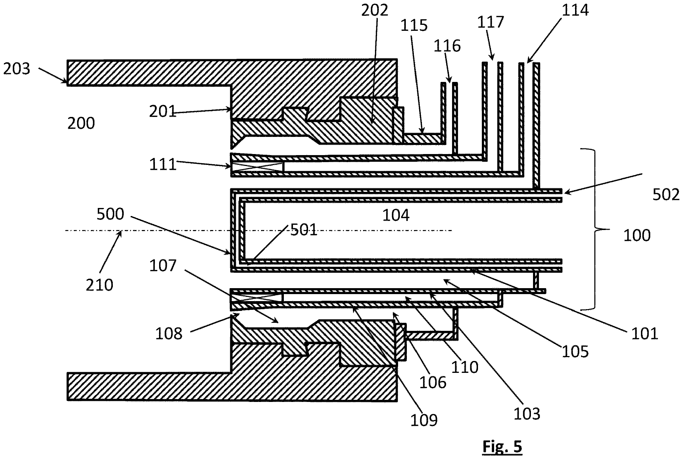

Figure 5 shows an alternative embodiment to the one illustrated on Fig 2. On figure 5, the cooling means are not made by a central injection of cooling air for cooling the distal plate, but instead are made of a jacket 500 having an envelope formed by said first innermost sleeve 101 and an additional internal sleeve 501 between which a flow of cooling fluid in injected by port 502.The effects on various parameters of operation of an annular shaft kiln comprising the burner and the combustion chamber according to the invention and the effects on the production of quicklime in such kiln has been measured over several months.

During a first period of time of six months, in an annular vertical shaft kiln comprising four cylindrical combustion chambers having their longitudinal axis oriented horizontally, one of the combustion chamber has been provided by a burner according to the second embodiment of the invention, forming thereby a combustion chamber according to the second embodiment described above, and the three other combustion chambers were provided with a burner of prior art wherein the burners of prior art comprise a central channel for injection of solid combustible carried by carrier air.

During a second period of time of 2.5 months all the burners were replaced with a burner according to the second embodiment of the invention described above and the temperature of the burners was set up to about 1230°C.

During a following third period of time of 1 month, the same burners were kept in place and the temperature of the burners was increased to about 1260°C- 1270°C.

During a fourth period of 1.5 month the conditions of operation were set back as to the second period.

The T60 of the production of quicklime obtained during those four periods has been measured periodically and it has been seen that the T60 decreased from 3.9 s to 3.1 s from the first period of time to the second period of time. During the third period, the increase of the temperature of the burners has increased to T60 to 5.1 s. This trial was provided for evaluating how the production could be increased without impacting too much the T60.

The daily production of quicklime during the first period of time and second period of time with a temperature of the burners set up between 1220 and 1230 °C was ranging between 140 and 160 T/day. During the third period using four burners according to the invention set up to a temperature ranging from 1250 to 1270°C, the daily production increased to range between 160 and 180T/day.

Comparative measurements of noxious compounds emitted during calcination of limestone in the annular shaft kilns provided with and without the burners according to the invention have been performed according to the standards in force and show notably a reduction factor of 25 for the emissions of mercury, a reduction factor of 10 for the emissions of arsenic and PAH (Polycyclic aromatic hydrocarbon), a reduction factor of 2 for the HCl, SOₓ and HF, from the use of burners of prior art to the use of burners according to the present invention.

Unlike the burners of prior art wherein the solid combustible is injected from a central channel inclined relative to the central axis of the combustion chamber and oriented towards the end of the combustion chamber opened to the bed of material, the burners according to the invention are oriented along the longitudinal axis of the combustion chamber, resulting in a flame well centered and well controlled in the combustion chamber with less constraints on the refractory. Therefore, the lifetimes of the refractories of the arch connected to the combustion chamber and the refractories of the combustion chamber are prolonged with less maintenance and production stops needed.

It should be understood that the present invention is not limited to the described embodiments and that variations can be applied without going outside of the scope of the appended claims

## Claims

1. Burner (100) for producing a flame in a combustion chamber (200) of an annular vertical shaft kiln (300) comprising :
a. a first innermost sleeve (101) having a bore (104) and a distal extremity (112) directed through the inside of the said combustion chamber (200), and
b. a second sleeve (103) surrounding said first innermost sleeve (101) and forming a first annular channel (105) with the said first innermost sleeve (101),
**characterized in that** said first innermost sleeve (101) provides a bluff body to create a bluff body effect on the flame, said first annular channel (105) being provided for an annular injection of a combustible, preferably a solid powdered combustible carried by a carrier fluid.

2. Burner (100) according to claim 1, wherein said first innermost sleeve (101) comprises cooling means.

3. Burner (100) according to claim 2, wherein said cooling means comprise a jacket (500) in which a cooling fluid is circulating, said jacket being provided along said innermost sleeve and a distal closure element of said first innermost sleeve (101).

4. Burner (100) according to claim 2, wherein said cooling means comprise a distal plate (102) provided with a plurality of holes (120), said cooling means being provided for allowing injection of cooling air through said bore (104).

5. Burner (100) according to claim 1, further comprising a tubular injector (400) arranged within the bore (104) of the said first innermost sleeve (101), the said tubular injector (400) being optionally removable, and comprising a connecting port for a secondary combustible supply to provide a secondary combustible for igniting the flame or for providing a cheaper combustible used partially in combination to the said combustible provided through the first annular channel.

6. Burner (100) according to claim 5, wherein said tubular injector (400) presents a sectional diameter lower than an internal sectional diameter of said bore (104) and is connected to a hole (120) of a distal plate (102) closing said first innermost sleeve (101).

7. Burner (100) according to claim 5 or 6, wherein said tubular injector (400) is a secondary burner comprising a tubular external wall forming said first innermost sleeve (101), said secondary burner being a co-burner for a secondary combustible for igniting the flame or for providing a cheaper combustible used partially in combination to the said combustible provided through the first annular channel (105).

8. Burner (100) according to any of the claims 1 to 7, **characterized in that** it further comprises a third sleeve (109) surrounding said second sleeve (103) and forming a third annular channel (110) with the said second sleeve (103), the said third annular channel (110) being provided for injection of air, at least one of the said second sleeve (103) or third sleeve (110) being provided by fins (111) arranged within the said third annular channel (110) and extending helically from a first location to a second location such as to provide a swirl movement to the said air improving the mixing of said combustible with air.

9. Combustion chamber (200) for an annular vertical shaft kiln (300), the said combustion chamber having a first closed extremity (201) provided with a cylindrical inlet (202) through which is inserted a burner (100) according to any of the claims 1 to 8, and wherein said cylindrical inlet (202) has a cylindrical inner wall forming a second annular channel (106) with the said burner (100) for injection of secondary air to confine the said flame within a fictive cylinder of diameter inferior to the diameter of the said combustion chamber (200).

10. Combustion chamber (200) according to claim 9 wherein the said burner (100) further comprises a third sleeve (109) surrounding said second sleeve (103) and forming a third annular channel (110) with the said second sleeve (103), the said third annular channel (110) being provided for injection of air, at least one of the said second sleeve (103) or third sleeve (110) being provided by fins (111) arranged within the said third annular channel (110) and extending helically from a first location to a second location such as to provide a swirl movement to the said air improving the mixing of said combustible with air.

11. Combustion chamber (200) according to claim 9 or 10 wherein the said combustion chamber is cylinder developed around a longitudinal axis (210) and wherein the said burner is arranged coaxially or parallel relative to the said longitudinal axis (210).

12. Combustion chamber (200) according to any one of the claims 9 to 11 wherein each of the said sleeves has walls, preferably plain walls and having preferably a thickness comprises between 2 mm and 20 mm, preferably between 4 mm and 10 mm.

13. Combustion chamber (200) according to any one of the claims 9 to 12 wherein the ratio between the external diameter of the said first innermost sleeve (101) on the inner diameter of the said second sleeve (103) is comprised between 10% and 99%, preferably between 50 % and 95%.

14. Combustion chamber (200) according to any one of the claims 9 to 13 wherein the said second annular channel between the said cylindrical inlet and the said burner comprises a first portion (107) upstream a second terminal portion (108), wherein the said first portion (107) forms a larger annular channel than the second terminal portion (108).

15. Combustion chamber (200) according to any one of the claims 9 to 14 wherein the ratio between the outermost diameter of the said burner (100) and the inner diameter of the said inlet (202) is comprised between 70% and 99%, preferably between 80% and 95%.

16. Combustion chamber (200) according to any one of the claims 9 to 15 wherein the ratio between the width of the said third annular channel (110) and the width of the said second annular channel (106) is comprised between 50% and 200%, preferably between 75% and 150%.

17. Process for combustion of a combustible, preferably a solid powdered combustible in a combustion chamber of an annular vertical shaft kiln the said combustion chamber having a first closed extremity (201) provided with a cylindrical inlet (202) through which is inserted a burner (100) according to any of the claims 1 to 8, for producing a flame, the said combustion chamber having a second extremity (203) opened to the inside of the said shaft kiln
wherein said cylindrical inlet (202) has a cylindrical inner wall forming a second annular channel (106) with the said burner (100) for injection of secondary air to confine the said flame within a fictive cylinder of diameter inferior to the diameter of the said combustion chamber (200) and wherein the process comprises the steps of:
- annular injection of said combustible, preferably said solid powdered combustible through said first annular channel (105) with a carrier fluid having a first speed of injection and igniting a flame;
- providing a bluff body effect to said flame;
- injection of secondary air with a third speed of injection increased relative to the said first speed of injection to confine the said flame within a fictive cylinder of diameter smaller than the diameter of the said combustion chamber (200).

18. Process according to claim 17, wherein the bluff body effect provided to said flame is further improved by injection of a cooling fluid through the said bore (104) of the said first innermost sleeve (101) at a second speed of injection reduced relative to the said first speed of injection for cooling a distal plate (102) closing the first innermost channel.

19. Process according to claim 17 or 18, wherein the said step of igniting said flame is achieved after a step of preheating the said combustion chamber with the said burner (100) fed by combustible gas or with another burner fed by combustible gas.

20. Process according to any one of the claims 17 to 19, wherein the said burner (200) further comprises a third sleeve (109) surrounding said second sleeve (103) and forming a third annular channel (110) with the said second sleeve (103), the said third annular channel (110) being provided for injection of air, one of the said second sleeve (103) or third sleeve (110) being provided by fins (111) arranged within the said third annular channel (110) and extending helically from an first location to a second location, the process further comprising a step of injecting air with a fourth flow rate intermediate between the said first flow rate and the said third flow rate through the said third annular channel (110) such as to provide a swirl movement to the said air improving the mixing of said combustible with air.

## Patentansprüche

1. Brenner (100) zur Erzeugung einer Flamme in einer Brennkammer (200) eines ringförmigen vertikalen Schachtofens (300), umfassend:
a. eine erste innerste Hülse (101) mit einer Bohrung (104) und einem distalen Ende (112), das durch das Innere der Brennkammer (200) gerichtet ist, und
b. eine zweite Hülse (103), die die erste innerste Hülse (101) umgibt und einen ersten ringförmigen Kanal (105) mit der ersten innersten Hülse (101) bildet,
**dadurch gekennzeichnet, dass** die erste innerste Hülse (101) einen Bluffkörper bildet, um einen Bluffkörpereffekt auf die Flamme zu erzeugen, wobei der erste ringförmige Kanal (105) für eine ringförmige Injektion eines brennbaren Stoffes, vorzugsweise eines festen pulverförmigen brennbaren Stoffes, der von einem Trägerfluid getragen wird, vorgesehen ist.

2. Brenner (100) nach Anspruch 1, wobei die erste innerste Hülse (101) eine Kühlvorrichtung umfasst.

3. Brenner (100) nach Anspruch 2, wobei die Kühlvorrichtung einen Mantel (500) umfasst, in dem ein Kühlfluid zirkuliert, wobei der Mantel entlang der innersten Hülse und einem distalen Verschlusselement der ersten innersten Hülse (101) vorgesehen ist.

4. Brenner (100) nach Anspruch 2, wobei die Kühlvorrichtung eine distale Platte (102) umfasst, die mit einer Vielzahl von Löchern (120) versehen ist, wobei die Kühlvorrichtung dafür vorgesehen ist, das Injizieren von Kühlluft durch die Bohrung (104) zu ermöglichen.

5. Brenner (100) nach Anspruch 1, der ferner einen rohrförmigen Injektor (400) umfasst, der in der Bohrung (104) der ersten innersten Hülse (101) ausgelegt ist, wobei der rohrförmige Injektor (400) optional abnehmbar ist, und wobei er eine Anschlussöffnung für eine sekundäre Brennstoffzufuhr umfasst, um einen sekundären Brennstoff zum Zünden der Flamme bereitzustellen oder um einen billigeren Brennstoff bereitzustellen, der teilweise in Kombination mit dem durch den ersten ringförmigen Kanal bereitgestellten Brennstoff verwendet wird.

6. Brenner (100) nach Anspruch 5, wobei der rohrförmige Injektor (400) einen Querschnittsdurchmesser aufweist, der kleiner ist als der innere Querschnittsdurchmesser der Bohrung (104) und mit einem Loch (120) einer distalen Platte (102) verbunden ist, die die erste innerste Hülse (101) verschließt.

7. Brenner (100) nach Anspruch 5 oder 6, wobei der rohrförmige Injektor (400) ein Sekundärbrenner ist, der eine rohrförmige Außenwand umfasst, die die erste innerste Hülse (101) bildet, wobei der Sekundärbrenner ein Mitbrenner für einen sekundären Brennstoff zum Zünden der Flamme oder zum Bereitstellen eines billigeren Brennstoffs ist, der teilweise in Kombination mit dem durch den ersten ringförmigen Kanal (105) zugeführten Brennstoff verwendet wird.

8. Brenner (100) nach einem der Ansprüche 1 bis 7, **dadurch gekennzeichnet, dass** er ferner eine dritte Hülse (109) umfasst, die die zweite Hülse (103) umgibt und mit der zweiten Hülse (103) einen dritten ringförmigen Kanal (110) bildet, wobei der dritte ringförmige Kanal (110) zum Injizieren von Luft vorgesehen ist, wobei mindestens entweder die zweite Hülse (103) oder die dritte Hülse (110) mit Rippen (111) versehen ist, die innerhalb des dritten ringförmigen Kanals (110) ausgelegt sind und sich schraubenförmig von einer ersten Stelle zu einer zweiten Stelle erstrecken, wobei die Luft in eine Wirbelbewegung versetzt wird, um die Vermischung des Brennstoffs mit der Luft zu verbessern.

9. Brennkammer (200) für einen ringförmigen vertikalen Schachtofen (300), wobei die Brennkammer ein erstes geschlossenes Ende (201) aufweist, das mit einem zylindrischen Einlass (202) versehen ist, durch den ein Brenner (100) nach einem der Ansprüche 1 bis 8 eingeführt wird, und wobei der zylindrische Einlass (202) eine zylindrische Innenwand aufweist, die mit dem Brenner (100) einen zweiten ringförmigen Kanal (106) zum Injizieren von Sekundärluft bildet, um die Flamme innerhalb eines fiktiven Zylinders mit einem Durchmesser, der kleiner als der Durchmesser der Brennkammer (200) ist, zu begrenzen.

10. Brennkammer (200) nach Anspruch 9, wobei der Brenner (100) ferner eine dritte Hülse (109) umfasst, die die zweite Hülse (103) umgibt und einen dritten ringförmigen Kanal (110) mit der zweiten Hülse (103) bildet, wobei der dritte ringförmige Kanal (110) zum Injizieren von Luft vorgesehen ist, wobei mindestens entweder die zweite Hülse (103) oder die dritte Hülse (110) mit Rippen (111) versehen ist, die innerhalb des dritten ringförmigen Kanals (110) ausgelegt sind und sich schraubenförmig von einer ersten Stelle zu einer zweiten Stelle erstrecken, um der Luft eine Wirbelbewegung zu verleihen, die die Vermischung des Brennstoffs mit der Luft verbessert.

11. Brennkammer (200) nach Anspruch 9 oder 10, wobei die Brennkammer um eine Längsachse (210) zylindrisch gebildet ist und der Brenner koaxial oder parallel zur Längsachse (210) ausgelegt ist.

12. Brennkammer (200) nach einem der Ansprüche 9 bis 11, wobei jede der Hülsen Wände, vorzugsweise glatte Wände, aufweist und vorzugsweise eine Dicke umfasst, die zwischen 2 mm und 20 mm, vorzugsweise zwischen 4 mm und 10 mm liegt.

13. Brennkammer (200) nach einem der Ansprüche 9 bis 12, wobei das Verhältnis zwischen dem Außendurchmesser der ersten innersten Hülse (101) und dem Innendurchmesser der zweiten Hülse (103) zwischen 10 % und 99 %, vorzugsweise zwischen 50 % und 95 %, liegt.

14. Brennkammer (200) nach einem der Ansprüche 9 bis 13, wobei der zweite ringförmige Kanal zwischen dem zylindrischen Einlass und dem Brenner einen ersten Abschnitt (107) stromaufwärts eines zweiten Endabschnitts (108) umfasst, wobei der erste Abschnitt (107) einen größeren ringförmigen Kanal bildet als der zweite Endabschnitt (108).

15. Brennkammer (200) nach einem der Ansprüche 9 bis 14, wobei das Verhältnis zwischen dem äußersten Durchmesser des Brenners (100) und dem Innendurchmesser des Einlasses (202) zwischen 70% und 99%, vorzugsweise zwischen 80% und 95% liegt.

16. Brennkammer (200) nach einem der Ansprüche 9 bis 15, wobei das Verhältnis zwischen der Breite des dritten ringförmigen Kanals (110) und der Breite des zweiten ringförmigen Kanals (106) zwischen 50% und 200%, vorzugsweise zwischen 75% und 150% liegt.

17. Verfahren zur Verbrennung eines Brennstoffs, vorzugsweise eines festen pulverförmigen Brennstoffs, in einer Brennkammer eines ringförmigen vertikalen Schachtofens, wobei die Brennkammer ein erstes geschlossenes Ende (201) aufweist, das mit einem zylindrischen Einlass (202) versehen ist, durch den ein Brenner (100) nach einem der Ansprüche 1 bis 8 zur Erzeugung einer Flamme eingeführt wird, wobei die Brennkammer ein zweites Ende (203) aufweist, das zum Inneren des Schachtofens hin geöffnet ist
wobei der zylindrische Einlass (202) eine zylindrische Innenwand aufweist, die mit dem Brenner (100) einen zweiten ringförmigen Kanal (106) zum Injizieren von Sekundärluft bildet, um die Flamme innerhalb eines fiktiven Zylinders mit einem Durchmesser, der kleiner als der Durchmesser der Brennkammer (200) ist, zu begrenzen.
und wobei das Verfahren folgende Schritte umfasst:
- ringförmiges Injizieren des Brennstoffs, vorzugsweise des festen pulverförmigen Brennstoffs, durch den ersten ringförmigen Kanal (105) mit einem Trägerfluid, das eine erste Injektionsgeschwindigkeit aufweist, und Zünden einer Flamme;
- Erzeugen eines Bluffkörper-Effekts in der Flamme;
- Injizieren von Sekundärluft mit einer dritten Injektionsgeschwindigkeit, die im Vergleich zur ersten Inj ektionsgeschwindigkeit erhöht ist, um die Flamme in einem fiktiven Zylinder mit einem Durchmesser, der kleiner ist als der Durchmesser der Brennkammer (200), einzuschließen.

18. Verfahren nach Anspruch 17, wobei der für die Flamme vorgesehene Bluffkörper-Effekt weiter verbessert wird durch Injizieren eines Kühlfluids durch die Bohrung (104) der ersten innersten Hülse (101) mit einer zweiten Injektionsgeschwindigkeit, die im Vergleich zur ersten Injektionsgeschwindigkeit reduziert ist, um eine distale Platte (102) zu kühlen, die den ersten innersten Kanal verschließt.

19. Verfahren nach Anspruch 17 oder 18, wobei der Schritt des Zündens der Flamme nach einem Schritt des Vorheizens der Brennkammer mit dem Brenner (100), der mit brennbarem Gas gespeist wird, oder mit einem anderen Brenner, der mit brennbarem Gas gespeist wird, durchgeführt wird.

20. Verfahren nach einem der Ansprüche 17 bis 19, wobei der Brenner (200) ferner eine dritte Hülse (109) umfasst, die die zweite Hülse (103) umgibt und mit der zweiten Hülse (103) einen dritten ringförmigen Kanal (110) bildet, wobei der dritte ringförmige Kanal (110) zum Injizieren von Luft vorgesehen ist, wobei entweder die zweite Hülse (103) oder die dritte Hülse (110) mit Rippen (111) versehen ist, die innerhalb des dritten ringförmigen Kanals (110) ausgelegt sind und sich schraubenförmig von einer ersten Stelle zu einer zweiten Stelle erstrecken, wobei das Verfahren ferner einen Schritt des Injizierens von Luft mit einer vierten Durchflussrate zwischen der ersten Durchflussrate und der dritten Durchflussrate durch den dritten ringförmigen Kanal (110) umfasst, wobei die Luft in eine Wirbelbewegung versetzt wird, um die Vermischung des Brennstoffs mit der Luft zu verbessern.

## Revendications

1. Brûleur (100) pour produire une flamme dans une chambre de combustion (200) d'un four à cuve verticale annulaire (300) comprenant :
a. un premier manchon le plus intérieur (101) ayant un alésage (104) et une extrémité distale (112) dirigée à travers l'intérieur de ladite chambre de combustion (200), et
b. un deuxième manchon (103) entourant ledit premier manchon le plus intérieur (101) et formant un premier canal annulaire (105) avec ledit premier manchon le plus intérieur (101),
**caractérisé en ce que** ledit premier manchon le plus intérieur (101) fournit un corps bloquant (ou un corps obstacle) pour créer un effet stabilisant (ou un effet accrochant) sur la flamme, ledit premier canal annulaire (105) étant prévu pour une injection annulaire d'un combustible, de préférence un combustible solide en poudre transporté par un fluide porteur.

2. Brûleur (100) selon la revendication 1, dans lequel ledit premier manchon le plus intérieur (101) comprend des moyens de refroidissement.

3. Brûleur (100) selon la revendication 2, dans lequel lesdits moyens de refroidissement comprennent une enveloppe (500) dans laquelle circule un fluide de refroidissement, ladite enveloppe étant prévue le long dudit manchon le plus intérieur et d'un élément de fermeture distal dudit premier manchon le plus intérieur (101).

4. Brûleur (100) selon la revendication 2, dans lequel lesdits moyens de refroidissement comprennent une plaque distale (102) munie d'une pluralité de trous (120), lesdits moyens de refroidissement étant prévus pour permettre l'injection d'air de refroidissement à travers ledit alésage (104).

5. Brûleur (100) selon la revendication 1, comprenant en outre un injecteur tubulaire (400) disposé à l'intérieur de l'alésage (104) dudit premier manchon le plus intérieur (101), ledit injecteur tubulaire (400) étant éventuellement amovible, et comprenant un orifice de connexion pour une alimentation en combustible secondaire afin de fournir un combustible secondaire pour allumer la flamme ou pour fournir un combustible moins cher utilisé partiellement en combinaison avec ledit combustible fourni à travers le premier canal annulaire.

6. Brûleur (100) selon la revendication 5, dans lequel ledit injecteur tubulaire (400) présente un diamètre de section inférieur à un diamètre de section intérieur dudit alésage (104) et est relié à un trou (120) d'une plaque distale (102) fermant ledit premier manchon le plus intérieur (101).

7. Brûleur (100) selon la revendication 5 ou 6, dans lequel ledit injecteur tubulaire (400) est un brûleur secondaire comprenant une paroi externe tubulaire formant ledit premier manchon le plus intérieur (101), ledit brûleur secondaire étant un co-brûleur pour un combustible secondaire pour allumer la flamme ou pour fournir un combustible moins cher utilisé partiellement en combinaison avec ledit combustible fourni à travers le premier canal annulaire (105).

8. Brûleur (100) selon l'une quelconque des revendications 1 à 7, **caractérisé en ce qu'**il comprend en outre un troisième manchon (109) entourant ledit deuxième manchon (103) et formant un troisième canal annulaire (110) avec ledit deuxième manchon (103), ledit troisième canal annulaire (110) étant prévu pour l'injection d'air, au moins l'un desdits deuxième manchon (103) ou troisième manchon (110) étant pourvu d'ailettes (111) disposées à l'intérieur dudit troisième canal annulaire (110) et s'étendant de manière hélicoïdale depuis un premier emplacement vers un deuxième emplacement de manière à fournir un mouvement de tourbillon audit air améliorant le mélange dudit combustible avec l'air.

9. Chambre de combustion (200) pour un four à cuve verticale annulaire (300), ladite chambre de combustion ayant une première extrémité fermée (201) munie d'une entrée cylindrique (202) à travers laquelle est inséré un brûleur (100) selon l'une quelconque des revendications 1 à 8, et dans laquelle ladite entrée cylindrique (202) présente une paroi intérieure cylindrique formant un deuxième canal annulaire (106) avec ledit brûleur (100) pour l'injection d'air secondaire pour confiner ladite flamme à l'intérieur d'un cylindre fictif de diamètre inférieur au diamètre de ladite chambre de combustion (200).

10. Chambre de combustion (200) selon la revendication 9 dans laquelle ledit brûleur (100) comprend en outre un troisième manchon (109) entourant ledit deuxième manchon (103) et formant un troisième canal annulaire (110) avec ledit deuxième manchon (103), le ledit troisième canal annulaire (110) étant prévu pour l'injection d'air, au moins l'un desdits deuxième manchon (103) ou troisième manchon (110) étant pourvu d'ailettes (111) disposées à l'intérieur dudit troisième canal annulaire (110) et s'étendant de manière hélicoïdale d'un premier emplacement à un deuxième emplacement de manière à fournir un mouvement de tourbillon audit air améliorant le mélange dudit combustible avec l'air.

11. Chambre de combustion (200) selon la revendication 9 ou 10, dans laquelle ladite chambre de combustion est un cylindre développé autour d'un axe longitudinal (210) et dans laquelle ledit brûleur est disposé coaxialement ou parallèlement audit axe longitudinal (210).

12. Chambre de combustion (200) selon l'une quelconque des revendications 9 à 11 dans laquelle chacun desdits manchons présente des parois, de préférence des parois pleines et ayant de préférence une épaisseur comprise entre 2 mm et 20 mm, de préférence entre 4 mm et 10 mm.

13. Chambre de combustion (200) selon l'une quelconque des revendications 9 à 12 dans laquelle le rapport du diamètre extérieur dudit premier manchon le plus intérieur (101) par rapport au diamètre intérieur dudit deuxième manchon (103) est compris entre 10 % et 99 %, de préférence entre 50 % et 95 %.

14. Chambre de combustion (200) selon l'une quelconque des revendications 9 à 13 dans laquelle ledit deuxième canal annulaire entre ladite entrée cylindrique et ledit brûleur comprend une première partie (107) en amont d'une deuxième partie terminale (108), dans laquelle ladite première partie (107) forme un canal annulaire plus grand que la deuxième partie terminale (108).

15. Chambre de combustion (200) selon l'une quelconque des revendications 9 à 14 dans laquelle le rapport du diamètre le plus extérieur dudit brûleur (100) par rapport au diamètre intérieur de ladite entrée (202) est compris entre 70 % et 99 %, de préférence entre 80% et 95%.

16. Chambre de combustion (200) selon l'une quelconque des revendications 9 à 15 dans laquelle le rapport de la largeur dudit troisième canal annulaire (110) par rapport à la largeur dudit deuxième canal annulaire (106) est compris entre 50 % et 200 %, de préférence entre 75% et 150%.

17. Procédé de combustion d'un combustible, de préférence d'un combustible solide en poudre, dans une chambre de combustion d'un four à cuve verticale annulaire, ladite chambre de combustion ayant une première extrémité fermée (201) munie d'une entrée cylindrique (202) à travers laquelle est inséré un brûleur (100) selon l'une quelconque des revendications 1 à 8, pour produire une flamme, ladite chambre de combustion présentant une deuxième extrémité (203) ouverte vers l'intérieur dudit four vertical
dans lequel ladite entrée cylindrique (202) présente une paroi intérieure cylindrique formant un deuxième canal annulaire (106) avec ledit brûleur (100) pour l'injection d'air secondaire afin de confiner ladite flamme dans un cylindre fictif de diamètre inférieur au diamètre de ladite chambre de combustion (200)
et dans lequel le procédé comprend les étapes suivantes :
- l'injection annulaire dudit combustible, de préférence dudit combustible solide en poudre à travers ledit premier canal annulaire (105) avec un fluide porteur ayant une première vitesse d'injection et allumant une flamme ;
- la fourniture d'un effet de corps stabilisant ou de corps accrochant à ladite flamme ;
- l'injection d'air secondaire avec une troisième vitesse d'injection augmentée par rapport à ladite première vitesse d'injection pour confiner ladite flamme au sein d'un cylindre fictif de diamètre inférieur au diamètre de ladite chambre de combustion (200).

18. Procédé selon la revendication 17, dans lequel l'effet de corps stabilisant ou de corps accrochant fourni à ladite flamme est encore amélioré par l'injection d'un fluide de refroidissement à travers ledit alésage (104) dudit premier manchon le plus intérieur (101) à une deuxième vitesse d'injection réduite par rapport à ladite première vitesse d'injection pour refroidir une plaque distale (102) fermant le premier canal le plus intérieur.

19. Procédé selon la revendication 17 ou 18, dans lequel ladite étape d'allumage de ladite flamme est réalisée après une étape de préchauffage de ladite chambre de combustion avec ledit brûleur (100) alimenté en gaz combustible ou avec un autre brûleur alimenté en gaz combustible.

20. Procédé selon l'une quelconque des revendications 17 à 19, dans lequel ledit brûleur (200) comprend en outre un troisième manchon (109) entourant ledit deuxième manchon (103) et formant un troisième canal annulaire (110) avec ledit deuxième manchon (103), ledit troisième canal annulaire (110) étant prévu pour l'injection d'air, l'un desdits deuxième manchon (103) ou troisième manchon (110) étant pourvu d'ailettes (111) disposées à l'intérieur dudit troisième canal annulaire (110) et s'étendant hélicoïdalement d'un premier emplacement à un deuxième emplacement, le procédé comprenant en outre une étape d'injection d'air avec un quatrième débit intermédiaire entre ledit premier débit et ledit troisième débit à travers ledit troisième canal annulaire (110) de telle manière à fournir un mouvement de tourbillon audit air améliorant le mélange dudit combustible avec l'air.
